# EUROPÄISCHE PATENTANMELDUNG

(11) **EP 1 078 968 A1**
(43) Veröffentlichungstag der Anmeldung: **28.02.2001**
(21) Anmeldenummer: 00116742.8
(22) Anmeldetag: 03.08.2000
(51) Int. Cl.: C09J 7/04, C09J 121/00, B29C 47/42

(54) **Selbstklebendes Abdeckband unter Verwendung eines bahnförmigen Trägers auf Papier- oder Vliesbasis und einer lösemittelfrei und mastikationsfrei hergestellten und beschichteten druckempfindlichen Selbstklebemasse auf Basis nicht thermoplastischer Elastomere**

(30) Priorität: 18.08.1999 DE 19939075
(71) Anmelder: Beiersdorf AG, 20245 Hamburg (DE)
(72) Erfinder: Hirsch, Ralf, 25451 Quickborn (DE); Hansen, Sven, 20255 Hamburg (DE); Grittner, Norbert, Dr., 22527 Hamburg (DE); Massow, Klaus, 22147 Hamburg (DE); Stähr, Jochen, 30179 Hannover (DE); Speer, Jörg, 25563 Wrist (DE); Detzer, Christian, 67117 Limburgerhof (DE); Leydecker, Heiko, 24730 Neustadt/Holstein (DE); Seitz, Karsten, Dr., 21614 Buxtehude (DE)

(57) **Zusammenfassung**

Abdeckband, enthaltend einen bahnförmigen Träger auf Papierbasis oder Vliesbasis und eine auf einer der beiden gegenüberliegenden Seiten des Trägers aufgebrachten Beschichtung aus einer druckempfindlichen Selbstklebemasse auf Basis von nichtthermoplastischen Elastomeren, erhalten durch ein Verfahren zur kontinuierlichen lösungsmittelfreien und mastikationsfreien Herstellung in einem kontinuierlich arbeitenden Aggregat mit einem Füll- und einem Compoundierteil, bestehend aus
a) Aufgabe der Festkomponenten der Selbstklebemasse wie Elastomere und Harze in den Füllteil des Aggregats, gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze in den Compoundierteil,
d) Herstellung einer homogenen Selbstklebemasse im Compoundierteil und
g) Austragen der Selbstklebemasse,

Beschichtung der Selbstklebemasse auf ein bahnförmiges Material, wobei die Beschichtung des bahnförmigen Materials mit einem Mehrwalzenauftragswerk, besonders mit einem 2- bis 5-Walzenauftragswerk, ganz besonders mit einem 4-Walzenauftragswerk durchgeführt wird, so daß die Selbstklebemasse bei Durchgang durch ein oder mehrere Walzenspalte auf die gewünschte Dicke ausgeformt wird, und wobei die Walzen des Auftragswerkes einzeln auf Temperaturen von 20 °C bis 150 °C eingestellt werden können.

## Beschreibung

Die vorliegende Erfindung betrifft ein selbstklebendes Abdeckband, bestehend aus einem bahnförmigen Trägers auf Papier- oder Vliesbasis und einer lösemittelfrei und mastikationsfrei hergestellten und beschichteten druckempfindlichen Selbstklebemasse auf Basis nicht thermoplastischer Elastomere.

Selbstklebende Abdeckbänder, bestehend aus einem bahnförmigen Träger auf Papier- oder Vliesbasis und einer auf mindestens einer Seite aufgebrachten druckempfindlichen Selbstklebemasse, im folgenden als Papierabdeckbänder bezeichnet, sind in ihrem Aufbau in der Literatur ausführlich beschrieben.

Für die Herstellung von Papierabdeckbändern werden im allgemeinen bandförmige Träger auf Basis ausgerüsteter Papiere verwendet. Unter ausgerüsteten Papieren werden dabei Papiere verstanden, deren Eigenschaften gleichzeitig oder alternativ durch eine Imprägnierung, eine Lackierung und einen Primer sowie optional durch Grundierungen und weitere Funktionsschichten den besonderen Anforderungen der Anwendungen angepaßt worden sind. Dabei sind Papiere unterschiedlicher Dehnung wie ungekreppte, flachgekreppte und hochgekreppte Papiere sowie Vliese eingeschlossen. Die verwendeten Komponenten und ihre Funktionen im Produkt sowie die notwendigen Verfahrensschritte sind aus der Literatur hinreichend bekannt und sind im folgenden kurz erläutert.

Während die Imprägnierung die mechanische Festigkeit und Dehnbarkeit des Papiers sowie seine Dichtigkeit und Resistenz gegenüber Wasser und Lösemitteln verbessert, dient die Lackierung der der Klebemasse abgewandten Seite des bandförmigen Papieres, im weiteren als Rückseite bezeichnet, auch dazu, die Dichtigkeit gegenüber Flüssigkeiten weiter zu verbessern, insbesondere aber sicherzustellen, daß die Haftung der druckempfindlichen Selbstklebemasse auf dieser Rückseite geringer ist als auf der gegenüberliegenden Seite, um damit die Abrollbarkeit der meist in Rollenform angebotenen Papierabdeckbänder sicherzustellen. Der Primer schließlich hat die Aufgabe, die Haftung der druckempfindlichen Selbstklebemasse auf der der lackierten Seite gegenüberliegenden Seite des bandförmigen Papierträgers soweit zu verbessern, daß eine Ablösbarkeit von diesem bei der Anwendung nicht mehr gegeben ist. Dies ist neben der Kohäsion der druckempfindlichen Selbstklebemasse für die rückstandsfreie Ablösbarkeit des Papierabdeckbandes vom Untergrund von entscheidender Bedeutung.

In einem weiteren Produktionsschritt wird der ausgerüstete bandförmige Papierträger, im folgenden nur noch als Papierträger bezeichnet, der Beschichtung mit einer druckempfindlichen Selbstklebemasse unterworfen. Dabei werden für Papierabdeckbänder weit überwiegend druckempfindliche Selbstklebemassen auf Basis nicht thermoplastischer Elastomerer wie Naturkautschuk und verwandter synthetischer nicht thermoplastischer Elastomere sowie thermoplastische Elastomere vom Typ der Blockcopolymere und Mischungen daraus eingesetzt.

Für die einwandfreie Verankerung der Masse auf dem Papierträger ist bisher der Einsatz eines Primers zwingend erforderlich.

Für druckempfindliche Selbstklebemassen auf Basis thermoplastischer Elastomerer werden gemäß dem Stande der Technik vorwiegend Blockcopolymere mit Polystyrolblockanteilen verwendet. Der Vorteil dieser Substanzklasse besteht darin, daß die im Polymer befindlichen Polystyroldomänen oberhalb von 100 °C erweichen, wobei die Viskosität der Klebemasse stark abfällt und dadurch eine leichte läsemittelfreie Verarbeitbarkeit gegeben ist. Die auf dieser Basis hergestellten Selbstklebemassen gehören deshalb in die Klasse der sogenannten Schmelzhaftkleber. Nach Abkühlung auf Raumtemperatur bilden sich die Polystyroldomänen zurück und verleihen den auf thermoplastischen Elastomeren basierenden Haftklebern eine gewisse Scherfestigkeit.

Der Vorteil der Verwendung thermoplastischer Elastomerer besteht im wesentlichen in der Vereinfachung des Streichprozesses. Der Verzicht auf brennbare Lösemittel macht die Trockneranlagen mit ihrem aufwendigen Energieaufwand für das Verdampfen und Rückgewinnen der Lösemittel und den Einsatz explosionsgeschützter Anlagen überflüssig. Hotmeltbeschichtungsanlagen sind kompakt und erlauben erheblich höhere Streichgeschwindigkeiten. Zudem handelt es sich um eine umweltfreundliche Technologie, bei der keine Lösemittelemissionen auftreten.

Die thermoplastischen Elastomeren lassen sich mit klebkraftfördernden Kohlenwasserstoffharzen im Extruderprozeß einwandfrei compoundieren. Auf diese Weise läßt sich ein gewünschtes Klebkraftniveau relativ einfach erreichen. Die resultierenden Haftkleber bleiben jedoch empfindlich gegen Temperaturen oberhalb 40 °C. Kritisch ist dieses verbleibende 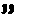 Kriechverhalten" für die auf dieser Basis hergestellten Selbstklebebänder für eine unbegrenzte Lagerstabilität (Verblocken der Rollen im Stapel insbesondere beim Transport in wärmere Klimazonen) und für die Anwendung bei höheren Arbeitstemperaturen (zum Beispiel als Abdeckbänder in der Automobillackierung, wo derartige Bänder trotz Nachvernetzung ihre Funktionsfähigkeit verlieren, indem der Haftkleber erweicht und die Scherfestigkeit zum Fixieren der Abdeckmaskenpapiere nicht mehr gewährleistet ist).

Aus diesem Grunde haben sich die bekannten Schmelzhaftkleber auf der Basis von Blockcopolymeren fast ausschließlich für Verpackungsbänder und Etiketten für den Einsatz bei Raumtemperaturen durchsetzen können und sind im Bereich der Papierabdeckbänder nur in unteren Qualitätssegmenten vertreten.

Mit nicht-thermoplastischen Elastomeren, wie zum Beispiel Naturkautschuk, lassen sich hingegen die geforderten Scherfestigkeiten erreichen. Die Leistungsfähigkeit dieses Elastomers ist im wesentlichen bestimmt durch extrem hohe Molekulargewichte und das daraus resultierende ausgewogene Verhältnis von Adhäsions- und Kohäsions-Eigenschaften und durch Homogenität und Stabilität der Abmischung von Massebestandteilen mit extrem hohen (Naturkautschuk) und relativ niedrigen mittleren Molekulargewichten (Klebharze und Weichmacher), die bei der Masseherstellung in branchenüblichen Misch- und Knetmaschinen unter Verwendung von Lösemitteln relativ einfach zu erreichen ist. Entsprechend stellen unter Verwendung von Lösemitteln hergestellte druckempfindliche Haftklebemassen auf Basis nicht thermoplastischer Elastomere, im folgenden als Lösemittelmassen bezeichnet, den Stand der Technik für Papierabdeckbänder dar.

Üblicherweise folgt bei der Herstellung von Lösemittelmassen einer gezielten und zum Erreichen der Löslichkeit unbedingt erforderlichen Mastikation des Kautschuks in geeigneten Knetmaschinen wie Innenmischern oder Sigmaknetern ein Lösevorgang. Er findet statt in unterschiedlich konstruierten Rührbehältern unter Zugabe klebrigmachender Harze und weiterer Hilfsstoffe wie Füllstoffe, Weichmacher, Stabilisatoren oder Vernetzungshilfsmittel. Alle diese Hilfsstoffe können jedoch nur eingesetzt werden, wenn sie in den verwendeten Lösemitteln löslich sind oder aber pulverförmig vorliegen. Andernfalls ist keine homogene oder feindisperse Verteilung der Rezepturbestandteile in der Klebmasse erreichbar. Die resultierenden Lösemittelmassen stellen viskose Flüssigkeiten mit Feststoffgehalten zwischen 20 und 60 % dar.

Sie werden in aufwendigen Kanal- oder Hängebeschichtungsanlagen vollflächig oder im Streifenstrich auf bahnförmige Papierträger beschichtet, unter strengen Sicherheitsvorschriften und mit hohem Energieaufwand getrocknet und schließlich zum fertigen Klebeband aufgewickelt.

Bei der Beschichtung von Lösemittelmassen auf Papierträger treten technologiebedingte Effekte auf, die die Eigenschaften der hergestellten Produkte negativ beeinflussen oder grundlegend einschränken. So treten häufig schon bei geringen Bahngeschwindigkeiten Blasen im Strichbild auf, die die Kohäsion der Klebmasse beeinträchtigen und in der Anwendung zu Klebmasse-Rückständen führen können. So wie sich dieser unerwünschte Effekt bei höheren Beschichtungsgeschwindigkeiten und Trocknungstemperaturen verstärkt, so verstärkt er sich auch bei höheren Flächengewichten. Es ist deshalb nur bei sehr geringen Bahngeschwindigkeiten und Trocknertemperaturen möglich, Masseaufträge von über 100 µm blasenfrei in einem Durchlauf zu erreichen.

Selbst bei schonender Trocknung der Lösemittelmasse entsteht eine meist unebene Klebmasseoberfläche, die die Papierstruktur in groben Zügen nachzeichnet. Das führt dazu, daß auf glatten Untergründen nur ein geringer Anteil der theoretischen Verklebungsfläche effektiv auf dem Untergrund haftet und die Verklebungsfestigkeit deshalb geringer ausfällt, als theoretisch zu erwarten wäre. Dies muß in der Praxis durch eine teure Erhöhung des Masseauftrages ausgeglichen werden.

Als weiterer Nachteil des Trocknens besteht darin, daß dieses mit einer thermischen Belastung verbunden ist, die zu einer Schädigung des Trägers führen kann, insbesondere Papier kann leicht übertrocknet werden.

Als Lösemittel werden meist aliphatische Kohlenwasserstoffe wie Heptan oder bestimmte Benzin-Schnitte oder aber Toluol verwendet. Das Lösemittel wird in den meisten Fällen durch Kondensieren oder Absorbieren regeneriert und dem Prozeß nach diesem ebenfalls sehr energieaufwendigen Verfahrensschritt erneut zugeführt. Die Schließung dieses Lösemittelkreislaufes war ein wesentlicher Fortschritt auf dem Weg zur energieeffizienten und damit kostengünstigen Herstellung von auf Lösemittelmassen basierenden Papierklebebändern. Er ist aber auch mit der Beschränkung auf ein definiertes Lösemittel verbunden, um konstanten Verfahrensbedingungen sicherzustellen und wirkt somit einschränkend bei der Rohstoffauswahl für die Klebmassenrezepturen.

Der folgerichtige und erfindungsgemäß mit zahlreichen Vorteilen für die hergestellten Produkte verknüpfte Schritt ist der völlige Verzicht auf jedwede Lösemittel im Prozeß der Klebmasseherstellung und der Klebmassebeschichtung.

Bislang waren wegen der extrem hochmolekularen Anteile des Kautschuks (mit M_{w} ≥ 1 Million) lösungsmittelfreie Selbstklebemassen mit der Schmelzhaftklebertechnologie unverarbeitbar, oder aber die verwendeten Kautschuke mußten vor der Verarbeitung so stark in ihrem Molekulargewicht reduziert (abgebaut) werden, daß sie infolge dieses Abbaus ihre Eignung für leistungsfähige Selbstklebemassen einbüßten.

Der zielgerichtet durchgeführte technische Prozeß des Kautschukabbaus unter der kombinierten Einwirkung von Scherspannung, Temperatur, Luftsauerstoff wird in der Fachliteratur als Mastikation (engl.: mastication) bezeichnet und zumeist im Beisein chemischer Hilfsmittel durchgeführt, welche aus der Fachliteratur als Mastiziermittel oder Peptizer, seltener auch als 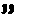 chemische Plastiziermittel" bekannt sind. Der Mastikationsschritt ist in der Kautschuktechnologie nötig, um eine Erleichterung der Aufnahme der Zusatzstoffe zu erzielen.

Nach Römpp (Römpp Lexikon Chemie - Version 1.5, Stuttgart/New York: Georg Thieme Verlag 1998) stellt die Mastikation eine gummitechnologische Bezeichnung für den Abbau langkettiger Kautschuk-Moleküle zur Erhöhung der Plastizität beziehungsweise Reduzierung der (Mooney-)Viskosität von Kautschuken dar. Die Mastikation wird durchgeführt durch Behandlung insbesondere von Naturkautschuk in Knetern oder zwischen Walzen bei möglichst niedrigen Temperaturen in Gegenwart von Mastikationshilfsmitteln (Mastizierhilfsmittel). Die dabei einwirkenden hohen mechanischen Kräfte führen zu einem 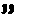 Zerreißen" der Kautschuk-Moleküle unter Bildung von Makroradikalen, deren Rekombination durch Reaktion mit Luftsauerstoff verhindert wird. Mastikationshilfsmittel wie aromatische oder heterocyclische Mercaptane beziehungsweise deren Zink-Salze oder Disulfide beschleunigen durch Begünstigung der Bildung von Primärradikalen den Mastikationsprozeß. Aktivatoren wie Metall- (Eisen-, Kupfer-, Cobalt-) Salze von Tetraazaporphyrinen oder Phthalocyaninen ermöglichen eine Erniedrigung der Mastikationstemperatur. Mastikationshilfsmittel werden bei der Mastikation von Naturkautschuk in Mengen von ca. 0,1 bis 0,5 Gew.-% in Form von Masterbatches eingesetzt, die eine gleichmäßige Verteilung dieser geringen Chemikalienmenge in der Kautschukmasse erleichtern.

Die Mastikation ist dabei streng zu unterscheiden von dem sich bei allen üblichen lösungsmittelfreien Polymertechnologien wie Compoundieren, Fördern und Beschichten in der Schmelze ergebenden Abbau, der Degradation (engl.: degradation).
Die Degradation ist eine Kollektivbezeichnung für unterschiedliche Prozesse, die das Aussehen und die Eigenschaften von Kunststoffen verändern. Degradation kann zum Beispiel durch chemische, thermische, oxidative, mechanische oder biologische Einflüsse oder auch durch Strahleneinwirkung (wie (UV-)Licht) verursacht werden. Folge sind zum Beispiel Oxidation, Kettenspaltungen, Depolymerisation, Vernetzung beziehungsweise Abspaltung von Seitengruppen der Polymeren. Die Stabilität von Polymeren gegenüber einer Degradation kann durch Additive, zum Beispiel durch Zusatz von Stabilisatoren wie Antioxidantien oder Photostabilisatoren erhöht werden.

Nichtgesteuerte Degradation stellt oft ein unerwünschtes Phänomen dar. Diese kann durch das Schaffen einer Schutzgasatmosphäre gering gehalten werden.

Verschiedene Wege zur lösungsmittelfreien Herstellung und Verarbeitung von Kautschuk-Haftklebern sind bekannt.

In dem Patent CA 698 518 wird ein Prozeß beschrieben, wie eine Masseherstellung durch Zusatz hoher Weichmacheranteile und/oder gleichzeitig starker Mastikation des Kautschuks zu erreichen ist. Zwar lassen sich nach diesem Verfahren Haftkleber mit extrem hoher Anfaßklebkraft erzielen, durch den relativ hohen Weichmacheranteil oder auch den starken Abbau der Molekularstruktur des Elastomers auf ein Molekulargewichtsmittel von M_{w} ≤ 1 Million ist die anwendergerechte Scherfestigkeit auch mit anschließender höherer Vernetzung nur eingeschränkt zu erreichen.

Die Verwendung von Polymerblends, wo neben nicht-thermoplastischem Naturkautschuk auch Blockcopolymere im Verhältnis von ca. 1:1 eingesetzt werden, stellt im wesentlichen eine unbefriedigende Kompromißlösung dar, da weder hohe Scherfestigkeiten beim Einsatz der Selbstklebebänder bei höheren Temperaturen, noch deutliche Verbesserungen gegenüber den im Patent beschriebenen Eigenschaften ergibt.

JP 07 324 182 A2 beschreibt ein mehrstufiges Verfahren, in dem ein doppelseitigklebendes Band eine Haftkleberschicht auf Basis eines Acrylharzklebers und eine zweite Schicht aus einem Blend aus Isopren-Styrol-Elastomer, Naturkautschuk und nicht reaktivem Kohlenwasserstoffharz (Arkon P 100) aufweist. Dieses Band dient als Teppichverlegeband, wo ebenfalls keine erhöhten Anforderungen an die Scherfestigkeit bei höheren Temperaturen gestellt sind.

Der Einsatz von nicht-thermoplastischen Elastomeren wird ferner beschrieben in JP 95 331 197, wobei ein Isocyanat-reaktiver Naturkautschuk (Polyisopren gepfropft mit Maleinsäureester) mit einem mittleren Molekulargewicht unterhalb 1 Million mit aliphatischen, nichtreaktiven Kohlenwasserstoffharzen Verwendung findet, der mit blockierten Isocyanaten (zum Beispiel Desmodur CT) vernetzt wird, wobei die Mischung bei 150 °C fünf Minuten lang vorvernetzt wird und nach anschließendem Ausstreichen auf PET-Folie bei 180 °C mehrere Minuten (zum Beispiel 15 Minuten) lang ausgehärtet wird. Diese Verfahrensweise macht deutlich, wie aufwendig eine Nachvernetzung zu erreichen ist, wenn der Naturkautschuk einem zu starken Abbau während des Herstellprozesses unterworfen wird.

In der Patentanmeldung JP 95 278 509 wird ein Selbstklebeband offenbart, bei welchem der Naturkautschuk auf ein mittleres Molekulargewicht von M_{w} = 100.000 bis 500.000 mastiziert wird, um eine streichfähige homogene Mischung mit Kohlenwasserstoff-, Kolophonium-/derivat-, Terpen-Harzen zu erhalten, die zwischen 140 °C und 200 °C und einer Streichviskosität von 10 bis 50 x 10³ cps gut verarbeitbar sind, die jedoch eine anschließende extrem hohe ESH-Dosis (40 Mrad) erfordern, um die für den Gebrauch notwendige Scherfestigkeit zu gewahrleisten.
Für Trägermaterialien wie imprägnierte und/oder geleimte Papiere sowie Gewebeträger auf Basis Zellwolle u.ä. ist das System wenig tauglich, da bei den erforderlich hohen Strahlendosen eine signifikante Trägerschädigung erfolgt.

Der Einsatz von ausschließlich nicht-thermoplastischen Kautschuken als Elastomerkomponente in der Haftkleberrezeptierung mit dem bestehenden Kostenvorteil, den zum Beispiel Naturkautschuke gegenüber den handelsüblichen Blockcopolymeren aufweisen, und den herausragenden Eigenschaften, insbesondere der Scherfestigkeit des Naturkautschuks und entsprechender Synthesekautschuke, wird auch in den Patenten WO 94 11 175, WO 95 25 774, WO 97 07 963 und entsprechend US 5,539,033, US 5,550,175 ausführlich dargestellt.
Hierbei werden die in der Haftklebertechnik gebräuchlichen Zusätze wie Tackifier-Harze, Weichmacher und Füllstoffe beschrieben.
Das jeweils offenbarte Herstellungsverfahren basiert auf einem Doppelschneckenextruder, der bei der gewählten Prozeßführung über Mastikation des Kautschuks und anschließender stufenweise Zugabe der einzelnen Zusätze mit einer entsprechenden Temperaturführung die Compoundierung zu einer homogenen Haftkleberabmischung ermöglicht.
Ausführlich wird der dem eigentlichen Herstellprozeß vorgeschaltete Mastikationsschritt des Kautschuks beschrieben. Er ist notwendig und charakteristisch für das gewählte Verfahren, da er bei der dort gewählten Technologie unumgänglich für die nachfolgende Aufnahme der weiteren Komponenten und für die Extrudierbarkeit der fertig abgemischten Masse ist. Beschrieben wird auch die Einspeisung von Luftsauerstoff, wie sie von R. Brzoskowski, J.L. und B. Kalvani in Kunststoffe 80 (8), (1990), S. 922 ff., empfohlen wird, um die Kautschukmastikation zu beschleunigen.

Diese Verfahrensweise macht den nachfolgenden Schritt der Elektronenstrahlenveretzung (ESH) unumgänglich, ebenso wie den Einsatz von reaktiven Substanzen als ESH-Promotoren zum Erzielen einer effektiven Vernetzungsausbeute.

Beide Verfahrensschritte sind in den genannten Patenten beschrieben, die gewählten ESH-Promotoren neigen aber auch zu unerwünschten chemischen Vernetzungsreaktionen unter erhöhten Temperaturen, dies limitiert den Einsatz bestimmter klebrigmachender Harze.

Aufgrund der unvermeidbaren hohen Produkttemperaturen verbietet eine Compoundierung im Doppelschneckenextruder den Einsatz thermisch aktivierbarer Substanzen, die zur Vernetzung der Klebmassen geeignet sind, wie zum Beispiel reaktiver (optional halogenierter) Phenolharze, Schwefel- oder schwefelabspaltender Vernetzersysteme, weil es wegen der im Prozeß einsetzenden chemischen Vernetzungsreaktionen zu so erheblicher Viskositätserhöhung kommt, daß die resultierende Haftklebemasse ihre Streichfähigkeit einbüßt.

Zusammenfassend kann festgestellt werden, daß alle bekannten Verfahren sich durch extrem starken Kautschukabbau auszeichnen. Dieser erfordert bei der Weiterverarbeitung der Massen zu Selbstklebebändern extreme Vernetzungsbedingungen und hat außerdem ein teilweise eingeschränktes Anwendungsprofil, insbesondere für den Einsatz resultierender Selbstklebebänder bei höheren Temperaturen, zur Folge.

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schnecken-maschinen, oder auch Planetwalzenextruder für diese Aufgabe eingesetzt.

Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen läßt, sowie der geringen Verweilzeit und des engen Verweilzeitspektrums hat sich ihr Einsatzgebiet in letzter Zeit u.a. auch auf Compoundierprozesse erweitert, die eine besonders temperaturkontrollierte Fahrweise erfordern.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil.

Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines Walzenzylinders mit Innenschrägverzahnung um die Zentralspindel umlaufen. Die Drehzahl der Zentralspindel und damit die Umlaufgeschwindigkeit der Planetenspindeln können variiert werden und sind damit ein wichtiger Parameter zur Steuerung des Compoundierprozesses.
Die Materialien werden zwischen Zentral- und Planetenspindeln beziehungsweise zwischen Planetenspindeln und Schrägverzahnung des Walzenteils umgewälzt, so daß unter Einfluß von Scherenergie und äußerer Temperierung die Dispergierung der Materialien zu einem homogenen Compound erfolgt.

Die Anzahl der in jedem Walzenzylinder umlaufenden Planetenspindeln kann ausgewählt und somit den Erfordernissen des Prozesses angepaßt werden. Die Spindelanzahl beeinflußt das freie Volumen innerhalb des Planetwalzenextruders, die Verweilzeit des Materials im Prozeß und bestimmt zudem die Flächengröße für den Wärme- und Materialaustausch. Die Anzahl der Planetenspindeln hat über die eingeleitete Scherenergie Einfluß auf das Compoundierergebnis. Bei konstantem Walzenzylinderdurchmesser läßt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen läßt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

In diesem Zusammenhang wird auf die Patentanmeldungen beziehungsweise das Gebrauchsmuster DE 196 31 182 A1, DE 94 21 955 U1, DE 195 34 813 A1, DE 195 18 255 A1, DE 44 33 487 A1 verwiesen, die eine Übersicht zum Stande der Technik auf dem Gebiete der Planetwalzenextruder darstellen.

So wird darüber hinaus in DE 39 08 415 A1 die Verarbeitung von Gummimischungen beziehungsweise gummiähnlichen Mischungen mittels Planetwalzenextruder beschrieben. Vorbatche oder Fertigmischungen werden zum Zwecke einer Weiterverarbeitung auf Folgeeinrichtungen auf einem Planetwalzenextruder mastiziert und plastifiziert. Ebenfalls ist die Herstellung von Fertigmischungen im Planetwalzenextruder beschrieben: Hierbei werden zu den Gummivormischungen Vulkanisationssysteme und andere Komponenten zudosiert.

In der DE 297 10 235 U1 wird eine Vorrichtung zum Plastifizieren von Kunststoffmaterial offenbart, die aus mindestens zwei Planetwalzenextrudern in paralleler Anordnung besteht. Die Planetwalzenextruder speisen eine gemeinsame Austragsstufe, die ihrerseits ein Einschneckenextruder, ein Zweischneckenextruder oder eine Zahnradpumpe sein kann. Zwischen den Planetwalzenextrudern und der Austragsstufe kann weiterhin eine Entgasungseinheit geschaltet sein, die vorzugsweise aus einem mit Vakuum beaufschlagten Fallschacht besteht.

Auch in der US 3,825,236 wird die Verwendung eines Planetwalzenextruders gezeigt, wobei sich dieser innerhalb eines Einschneckenextruders befindet. In der DE 23 03 366 A1 wird eine extrusionsfähige Masse aus thermoplastischem oder duroplastischem Kunststoff in Schneckenstrangpressen mit Planetwalzen hergestellt, wobei der als Granulat oder als Pulver vorliegende Kunststoff nach dem Stopfen im Bereich der Planetenwalzen mastiziert und plastifiziert sowie bis auf Extrusionsdruck verdichtet wird. Als erfindungswesentlich wird dabei beansprucht, daß der gestopfte Kunststoff bis zur Bildung von Festkörpern vorverdichtet, anschließend im Einzugsbereich der Planetenwalzen unter Druckabbau zerkleinert sowie mastiziert, plastifiziert sowie bis auf Extrusionsdruck verdichtet wird.

Aufgabe der vorliegenden Erfindung ist es, ein Abdeckband zur Verfügung zu stellen, mit einem Papier- oder Vliesträger und einer lösemittelfrei hergestellten Klebemassen auf Basis von nicht-thermoplastischen Elastomeren zu schaffen. Weiterhin sollen die neuen Klebebänder leicht abrollen und einen guten Verbund zwischen Klebemasse und Trägerfolie aufweisen.

Gelöst wird diese Aufgabe durch ein Abdeckband, wie es im Hauptanspruch dargelegt ist. Gegenstand der Unteransprüche sind vorteilhafte Fortbildungen des Erfindungsgegenstands. Des weiteren betrifft die Erfindung Verfahren zur Herstellung des erfindungsgemäßen Klebebands.

Demgemäß betrifft die Erfindung ein Abdeckband, enthaltend einen bahnförmigen Träger auf Papierbasis oder Vliesbasis und eine auf einer der beiden gegenüberliegenden Seiten des Trägers aufgebrachten Beschichtung aus einer druckempfindlichen Selbstklebemasse auf Basis von nicht-thermoplastischen Elastomeren, erhalten durch ein Verfahren zur kontinuierlichen lösungsmittelfreien und mastikationsfreien Herstellung in einem kontinuierlich arbeitenden Aggregat mit einem Füll- und einem Compoundierteil, bestehend aus den folgenden Schritten
a) Aufgabe der Festkomponenten der Selbstklebemasse wie Elastomere und Harze in den Füllteil des Aggregats, gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze gegebenenfalls in geschmolzenem Zustand in den Compoundierteil,
d) Herstellung einer homogenen Selbstklebemasse im Compoundierteil,
e) Austragen der Selbstklebemasse und
f) Beschichtung der Selbstklebemasse auf ein bahnförmiges Material, wobei die Beschichtung des bahnförmigen Materials mit einem Mehrwalzenauftragswerk, besonders mit einem 2- bis 5-Walzenauftragswerk, ganz besonders mit einem 4-Walzenauftragswerk durchgeführt wird, so daß die Selbstklebemasse bei Durchgang durch ein oder mehrere Walzenspalte auf die gewünschte Dicke ausgeformt wird, und wobei
   die Walzen des Auftragswerkes einzeln auf Temperaturen von 20 °C bis 150 °C eingestellt werden können .

Besonders geeignet für die erfindungsgemäßen Abdeckbänder sind als bahnförmiges Trägermaterial ein ungekrepptes Papier mit einer Reißdehnung von 1 bis 6 %, ein flachgekrepptes Papier mit einer Reißdehnung von 7 bis 20 % oder ein hochgekrepptes Papier mit einer Reißdehnung von 20 bis 60 %.

In einer bevorzugten Ausführungsform des Abdeckbands weist der bahnförmige Träger bei im wesentlichen unveränderter Masseverankerung weder einen physikalischen Primer noch einen chemischen Primer auf, was insbesondere ermöglicht wird durch den hohen Spaltdruck im Übertragungsspalt des Walzwerkes.

Als besonders vorteilhaft hat sich die Verwendung eines Planetwalzenextruders als kontinuierlich arbeitendes Aggregat herausgestellt, wobei dessen Compoundierteil vorzugsweise zumindest aus zwei, besonders bevorzugt aber aus drei gekoppelten Walzenzylindern besteht, wobei jeder Walzenzylinder einen oder mehrere separate Temperierkreise aufweisen kann.

Im Unterschied zu sonst üblichen Herstellungsverfahren erfolgt insbesondere im Planetwalzenextruder keine eigenschaftsschädigende Mastikation der nicht-thermoplastischen Elastomeren, da diese hier nicht separat dem Einfluß hoher Scherenergie unterworfen werden, sondern stets zusammen mit einer oder mehreren flüssigen Komponenten verarbeitet werden. Diese Flüssigkomponenten können sowohl Weichmacher wie zum Beispiel Öle sein, aber auch Harze, die erst während des Compoundierprozesses bei Einwirken von Scherenergie und/oder äußerer Temperierung aufschmelzen. Durch die Anwesenheit dieser Flüssigkomponenten wird das Ausmaß an Friktionsenergie derartig limitiert, daß die Mastikation des Kautschuks, d.h. der Molekulargewichtsabbau der Elastomeren, sowie hohe resultierende Compoundierungstemperaturen vermieden werden können.

Zudem weisen Planetwalzenextruder außerordentlich große Flächen auf, an denen es zum Materialabtausch und Oberflächenerneuerung kommt, mit der die über Friktion eingebrachte Scherenergie schnell abgeführt werden kann und auf diese Weise unerwünscht hohe Produkttemperaturen vermieden werden.

Der Füllteil des Walzenzylinders besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Die Anzahl der Planetenspindeln hat, wie bereits ausgeführt, über die eingeleitete Scherenergie Einfluß auf das Compoundierergebnis: Bei konstantem Walzenzylinderdurchmesser läßt sich mit größerer Spindelanzahl eine bessere Homogenisier- und Dispergierleistung beziehungsweise ein größerer Produktdurchsatz erzielen. Gemäß vorliegender Erfindung sind zum Erzielen eines guten Verhältnisses von Compoundiergüte zu Produktrate vorzugsweise mindestens die Hälfte, besonders bevorzugt sogar mindestens ¾ der möglichen Anzahl an Planetenspindeln einzusetzen.

Es ist vorteilhaft, einen Planetwalzenextruder zu verwenden, dessen Compoundierteil durch Zusammenschalten von mindestens zwei Walzenzylindern verlängert ist. Zum einen ist dadurch trotz Anwesenheit friktionsreduzierender Komponenten zur Vermeidung der Kautschukmastikation ein vollständiges Aufschließen der Elastomerkomponenten sowie die gewünschte Homogenisier- und Dispergierleistung bei wirtschaftlichen Durchsatzraten möglich; zum anderen ermöglicht das Zusammenschalten vorzugsweise separat temperierter Walzenzylinder eine ausgewogene Temperaturführung des Prozesses, die die Verwendung von thermisch aktivierbaren Vernetzersystemen erlaubt.

Während im vorderen Compoundierteil des Planetwalzenextruders die Walzenzylinder vorteilhafterweise mit Temperaturen oberhalb des Schmelzpunkts der verwendeten Harze beheizt werden, wird der hintere Compoundierteil vorteilhafterweise zum Absenken der Produkttemperatur gekühlt. Dadurch wird die Verweilzeit der Selbstklebemasse bei höheren Temperaturen möglichst kurz gehalten, so daß eine Aktivierung der in der Selbstklebemasse enthaltenen thermischen Vernetzersysteme vermieden wird.

Selbstverständlich kann jeder Walzenzylinder hinsichtlich Anzahl und Art der Planetenspindeln unterschiedlich bestückt sein und so den jeweiligen rezepturiellen und verfahrenstechnischen Anforderungen angepaßt sein.

Zwischen zwei zusammengeschalteten Walzenzylindern befindet sich im allgemeinen ein Anlaufring, durch dessen freien Querschnitt die Zentralspindel führt und der die Planetenspindeln eines Walzenzylinders ortsfest hält. Anlaufringe können verschiedene freie Querschnitte aufweisen, womit der Rückstau des Produkts und damit der Füllgrad beziehungsweise das Ausmaß an Scherenergie variiert und an die Prozeßanforderungen angepaßt werden kann. Zusätzlich können die Anlaufringe mit radialen Bohrungen versehen sein, über die Flüssigkeiten wie zum Beispiel Weichmacheröle oder auch Schutzgase wie Stickstoff, Argon, Kohlendioxid o.ä. dem Compoundierteil des Planetwalzenextruders zugeführt werden können.

Die Zentralspindel sowie jeder Walzenzylinder sollten vorzugsweise über einen oder mehrere separate Temperier- beziehungsweise Kühlkreise verfügen, um ein Temperatur-regime zu ermöglichen, das den Einsatz thermisch aktivierbarer Vernetzungssysteme erlaubt. In Fällen, wo dies nicht erforderlich ist, können die Temperierkreise zusammengeschalteter Walzenzylinder auch miteinander verbunden werden, um die Anzahl an Temperiergeräten möglichst gering zu halten.

Im Sinne der Erfindung sollten der Füllteil des Planetwalzenextruders und die Zentralspindel vorzugsweise nicht beheizt, sondern gekühlt werden, um ein Anbacken von Material auf der Füllschnecke zu vermeiden sowie einen effektiven Wärmeaustausch mit der Klebemasse zu gewährleisten.

Im Verfahren gemäß vorliegender Erfindung werden alle Feststoffkomponenten wie Elastomere, Füll- und Zuschlagstoffe, Harze, Alterungsschutzmittel usw. gemeinsam in den Einfüllbereich des Planetwalzenextruders eindosiert. Dabei können diese Stoffe sowohl als jeweils separate Komponenten, wie auch als gemeinsamer Premix oder auch als Teilvormischungen dem Compoundieraggregat zugegeben werden. Die Dosierung der Komponenten als Premix eignet sich besonders, wenn die Komponenten ähnliche Darreichungsformen beziehungsweise ähnliche Schüttdichten aufweisen, so daß sich auf diese Weise die Anzahl der Dosiersysteme gering halten läßt. Premixe lassen sich auf einfache Weise zum Beispiel in Pulvermischern herstellen. Zur Dosierung der einzelnen Festkomponenten eignen sich volumetrisch und gravimetrisch arbeitende Dosiersysteme in gängigen Ausführungen. Auch besteht die Möglichkeit, die Flüssigkomponenten oder auch nur Teile hiervon, wie zum Beispiel Weichmacheröl, einem Premix zuzugeben.

Die zudosierten Materialien werden von der Schnecke des Füllteils in den ersten Walzenzylinder des Planetwalzenextruders transportiert. Zwischen jedem Walzenzylinder können über Bohrungen in den Anlaufringen flüssige Komponenten wie zum Beispiel Weichmacheröle, Weichharze oder Harzschmelzen zugegeben werden. Über die Menge an Flüssigkeit, die bereits vor Einfluß an Scherenergie zugegeben wird, lassen sich sowohl Abbaugrad der Elastomere wie auch Compoundierungstemperatur der druckempfindlichen Klebemasse beeinflussen. Beispielsweise wird ein besonders geringer Molekulargewichtsabbau der Elastomeren erhalten, wenn ein flüssiger Weichmacher bereits dann zugegeben wird, wenn noch keinerlei Einfluß von Friktionsenergie erfolgte, also dieser entweder einem Feststoffpremix zugegeben wird, oder das Weichmacheröl zwischen Füllschnecke und erstem Walzenzylinder kontinuierlich zudosiert wird. Auch ein Aufteilen der Flüssigkomponenten als sogenannter split-feed über die Verfahrenslänge ist möglich und ist ein weiterer Parameter zur Steuerung des Prozesses hinsichtlich Elastomerabbau und Produkttemperatur.

Das beschriebene Verfahren erlaubt die Herstellung von hochleistungsfähigen Selbstklebemassen und insbesondere im Verbund mit einer nachgeschalteten Beschichtungs- und Vernetzungseinheit die Herstellung von hochleistungsfähigen Abdeckbändern unter Erlangung besonderer Kostenvorteile.

Es besteht im wesentlichen aus den bereits dargelegten Verfahrensschritten, welche optional unter einer Schutzgasatmosphäre zur Vermeidung von oxidativem Polymerabbau durchgeführt werden können.

Im ersten Verfahrensschritt wird eine Masse aus den Elastomeren und den für die Herstellung von selbstklebenden Massen benötigten bekannten Zuschlagstoffen wie Füllstoffe, Alterungsschutzmittel, Weichmacher und Klebharze in einem Planetwalzenextruder lösungsmittelfrei hergestellt, wobei die Masse eine Endtemperatur von weniger als 150 °C, bevorzugt weniger als 130 °C, ganz besonders bevorzugt zwischen 70 °C und 110 °C aufweist. Die Gesamtverweilzeit der Masse im Planetwalzenextruder sollte nicht einen Wert von drei Minuten überschreiten.

Die Beschichtung des bahnförmigen Materials erfolgt lösemittelfrei mit einem Mehrwalzenauftragswerk. Besonders effektiv und vorteilhaft kann dies mit einem 2- bis 5-Walzenauftragswerk erfolgen, ganz besonders mit einem 4-Walzenauftragswerk, so daß die Selbstklebemasse bei Durchgang durch ein oder mehrere Walzenspalte vor Übergabe auf das bahnförmige Material auf die gewünschte Dicke ausgeformt wird.
Die Walzen des Auftragswerkes können dabei einzeln auf Temperaturen von 20 °C bis 150 °C eingestellt werden.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Dieses Beschichtungsverfahren wird besonders dann bevorzugt, wenn die Viskositäten der Selbstklebemasse Werte von 5000 Pa*s bei einem Schergefälle von 1 rad/s übersteigt, da dann eine Beschichtung mit Extrusionsdüsen nicht mehr die erforderte Genauigkeit im Masseauftrag liefert.
Je nach Art des zu beschichtenden bahnförmigen Trägermaterials kann die Beschichtung im Gleichlauf- oder Gegenlaufverfahren erfolgen.

Die Walzen des Auftragswerkes können in einer als besonders vorteilhaft dargestellten Ausführungsform der Erfindung einzeln auf Temperaturen von 70 °C bis 120 °C, insbesondere 90 °C und 100 °C, eingestellt werden.

Um einen hinreichend präzisen, dünnen ausgeformten Klebstoffilm zu erzeugen, weisen die Umfangsgeschwindigkeiten der Walzen Differenzen auf.
So können, ohne hiermit den Erfindungsgedanken einschränken zu wollen, die Differenzgeschwindigkeiten bei einem geeigneten 4-Walzenauftragswerk betragen

| Walze | Differenzgeschwindigkeit zur relativen Bahngeschwindigkeit [%] |
|---|---|
| Rakelwalze | 0,1 bis 25 insbesondere 1 bis 2 |
| Dosierwalze | 10 bis 100 insbesondere 30 bis 40 |
| Übertragungswalze | 10 bis 100 insbesondere 75 bis 90 |

Des weiteren hat sich gezeigt, daß das Verfahren der Beschichtung besonders vorteilhaft durch ein 4-Walzenauftragswerk erfolgen kann, dessen Walzen folgende Eigenschaften aufweisen:
- Dosierwalze, Rakelwalze und Übertragungswalze: biegesteif,
- Rakelwalze und Übertragungswalze: Stahl, verchromt, porenfrei, geschliffen, hochglanzpoliert, max. Rauhtiefe 0,4 µm,
- Dosierwalze: PU, Shore-Härte D = 95.

Nach DIN 53505 (1987-06) entspricht die Shore-Härte bei der Prüfung von Elastomeren, Gummi und Kautschuk dem Widerstand gegen das Eindringen eines Kegelstumpfes (A oder C) beziehungsweise eines abgerundeten Kegels (D), der durch das Zusammendrücken einer Feder mit einer festgelegten Federcharaktenstik gemessen und in dimensionslosen Shore-A(C, D)-Härteeinheiten ausgedrückt wird. Bei der Prüfung von Stahl wird die Shore-Rückprallhärte in dem sogenannten Skleroskop gemessen, bei dem die Rückprallhöhe eines Fallhammers, der in einem senkrechten Rohr auf die Prüffläche fällt, bestimmt wird (Römpp Lexikon Chemie - Version 1.5, Stuttgart/New York: Georg Thieme Verlag 1998).

Je nach Viskosität der Selbstklebemasse eignen sich verschiedene Verfahren zur Beschichtung der bahnförmigen Materialien. Selbstklebemassen mit Viskositäten bis 5000 Pa*s bei einem Schergefälle von 1 rad/s, wie sie beispielsweise bei Verwendung höherer Anteile an Weichmacherölen oder durch Zusatz von thermoplastischen Elastomeren zu den nicht-thermoplastischen Elastomeren erhalten werden, lassen sich mittels einer dem Planetwalzenextruder nachgeschalteten Extrusionsdüse beschichten, und zwar wird bevorzugt als Extrusionsdüse eine Kleiderbügelverteilkanaldüse eingesetzt.

Um einen definierten, vollflächigen Masseauftrag auf dem bahnförmigen Material zu erhalten, ist es vorteilhaft, daß die Selbstklebemasse vor Eintritt in die Beschichtungsdüse einer Entgasung unterworfen wird, was besonders wichtig ist im Falle der Verwendung von Schutzgasen während des Compoundierprozesses im Planetwalzenextruder. Beim dargelegten Verfahren erfolgt die Entgasung unter Einfluß von Vakuum vorzugsweise in Schneckenmaschinen, die zugleich die Druckverluste der Rohrleitungen und Beschichtungsdüse überwinden können. Hierfür werden Einschneckenförderextruder mit nachgeschalteter Verteilerdüse besonders bevorzugt, die zudem über eine Druckregelung verfügen, so daß die Beschichtung der bahnförmigen Trägermaterialien mit Masseaufträgen sehr geringer Schwankungsbreite erfolgen kann.

Die Verteilerdüse sollte, bezogen auf einen Querschnitt der Rakelwalze, im Bereich von 9 bis 12 Uhr positioniert sein, vorzugsweise im Bereich zwischen 10 bis 11 Uhr, um entsprechende Beschichtungsergebnisse zu erzielen.

Die Beschichtung ist auf Walzenbeschichtungsauftragswerken oder Mehrwalzen-Beschichtungskalandem bei Temperaturen unterhalb von 100 °C möglich, so daß auch Selbstklebemassen beschichtet werden können, die thermisch aktivierbare Vernetzer enthalten. Zum Zwecke erhöhter Gasblasenfreiheit der beschichteten Klebmasse kann zwischen Planetwalzenextruder und Auftragswerk eine Vakuumentgasung, zum Beispiel eine Vakuumkammer, ein Entgasungsextruder oder ähnliches installiert sein.

In einer vorteilhaften Ausführungsform des Abdeckbands ist die Selbstklebemasse nicht vernetzt und besitzt eine Viskosität von 10.000 bis 300.000 Pa*s bei 110 °C und 0,1 rad/s.

Falls erwünscht, kann im Verbund mit Masseherstellung und Beschichtung in einem dritten Verfahrensschritt die Vernetzung der Selbstklebemasse erfolgen, und zwar dergestalt, daß die Beschichtung des bahnförmigen Materials mit dem Mehrwalzenauftragswerk durchgeführt wird, wobei auf der letzten nicht bahnführenden Walze (insbesondere die Übertragungswalze) die ausgeformte Klebemasse mit Hilfe von Elektronenstrahlen oder UV-Strahlen vernetzt wird durch ionisierende Strahlung, wie zum Beispiel Elektronenstrahlen, so daß das resultierende Selbstklebeband scherfest und temperaturstabil wird. Auch UV-Strahlen können für die Vernetzung eingesetzt werden, hierbei müssen der Selbstklebemasse entsprechende UV-Promotoren, wie zum Beispiel Ebecryl 140 der Firma UCB, zugesetzt werden.

Für eine darüber hinaus verbesserte Leistungsfähigkeit oder im Falle ESH-sensibler Träger kann die Vernetzung auch durch thermisch aktivierbare Vernetzer unter Temperatureinwirkung erfolgen.
Die hierzu notwendige Erwarmung der druckempfindlichen Hotmelt-Klebemasse kann mit Hilfe der vorbekannten Techniken erfolgen, insbesondere mit Hilfe von Hochtemperatur-Kanälen, aber auch mit Hilfe von Infrarot-Strahlem oder mittels hochfrequenter magnetischer Wechselfelder, beispielsweise HF- UHF- oder Mikrowellen.

Die Vernetzung der druckempfindlichen Hotmelt-Klebemasse kann weiterhin mittels einer Kombination von ionisierender Strahlung und thermisch aktivierbaren chemischen Vernetzern durchgeführt werden.

Es resultiert eine sehr scherfeste druckempfindliche Selbstklebemasse, die in ihren Eigenschaften gleichartigen, im Lösemittelverfahren hergestellten Selbstklebemassen vergleichbar ist.

Mit dem erfindungsgemäßen Verfahren sind fast ausnahmslos alle vorbekannten und in der Literatur beschriebenen Komponenten von kautschukbasierenden Selbstklebemassen lösemittelfrei verarbeitbar.

Vorteilhafterweise ist das nicht-thermoplastische Elastomer gewählt aus der Gruppe der Naturkautschuke oder der Synthesekautschuke oder es besteht aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den nicht-thermoplastischen Elastomeren zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol-(SIS) und Styrol-Butadien-Styrol (SBS)-Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im 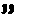 Handbook of Pressure Sensitive Adhesive Technology" von Donatas Satas (van Nostrand, 1989) sei ausdrücklich hingewiesen.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, insbesondere thermisch reaktive, blockierungsmittelfreie Isocyanate, wobei die Funktionalität der thermisch reaktiven, blockierungsmittelfreien Isocyanate im Mittel größer als 1 ist, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Bevorzugt ist ein thermisch reaktives Vernetzungssystem, das mindestens ein Vernetzungshilfsmittel aus der Familie der Phenolharze oder Alkylphenolharze oder ihrer halogenierten Derivate sowie optional ein saures Kobophoniumharz oder ein saures Kolophoniumharzderivat und mindestens ein zweiwertiges Metalloxid enthält, besonders bevorzugt ein thermisch reaktives Vernetzungssystem, das thermisch reaktive Vernetzungshilfsmittel aus der Familie der Phenolharze oder Alkylphenolharze oder ihrer halogenierten Derivate enthält, die in aliphatischen und aromatischen Kohlenwasserstoffen schwer oder nicht löslich sind.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Die Dicke der Selbstklebemasse auf dem bahnförmigen Material kann zwischen 10 µm und 2000 µm betragen, vorzugsweise zwischen 15 µm und 150 µm.

Eine Ausführungsform des Abdeckbands umfaßt einen gegenüber ionisierender Strahlung, UV-Licht oder Wärme empfindlichen bahnförmigen Träger auf Papierbasis und eine auf einer der beiden gegenüberliegenden Seiten des Trägers vernetzt aufgebrachte Beschichtung aus einer druckempfindlichen Haftklebemasse.

Überraschend und für den Fachmann in keinster Weise vorhersehbar, ergibt sich unter Einsatz des dargelegten Verfahrens ein Abdeckband, das bei höheren Beschichtungsgeschwindigkeiten herstellbar ist und dabei keine Blasenbildung zeigt. Auch höhere Schichtdicken an Klebmasse lassen sich verwirklichen.

Der Träger kann empfindlicher sein, weil er nicht durch Trocknung beansprucht wird. Des weiteren ist ein Massedurchschlag, wie er bei porösen oder dünnen Trägern auftreten kann, weitgehend ausgeschlossen.

Durch das glatte Strichbild ergibt sich für das Abdeckband eine höhere effektive Verklebungsfläche und damit eine höhere Verklebungsfestigkeit und Unterlaufsicherheit.

Anhand der folgenden Beispiele soll die Erfindung näher beschrieben werden, ohne damit die Erfindung einschränken zu wollen.

Die eingesetzten Prüfmethoden sind im folgenden kurz charakterisiert:

Die Klebkraft (Schälfestigkeit) der Massen wurde nach AFERA 4001 bestimmt.

Die Scherfestigkeit der untersuchten Klebmassen wurde nach PSTC 7 (Holding Power) bestimmt. Alle angegebenen Werte wurden bei Raumtemperatur und den angegebenen Belastungen von 10 oder 20 N, mit einer Verklebungsfläche von 20x13 mm² bestimmt. Die Ergebnisse sind in Minuten Haltezeit angegeben.

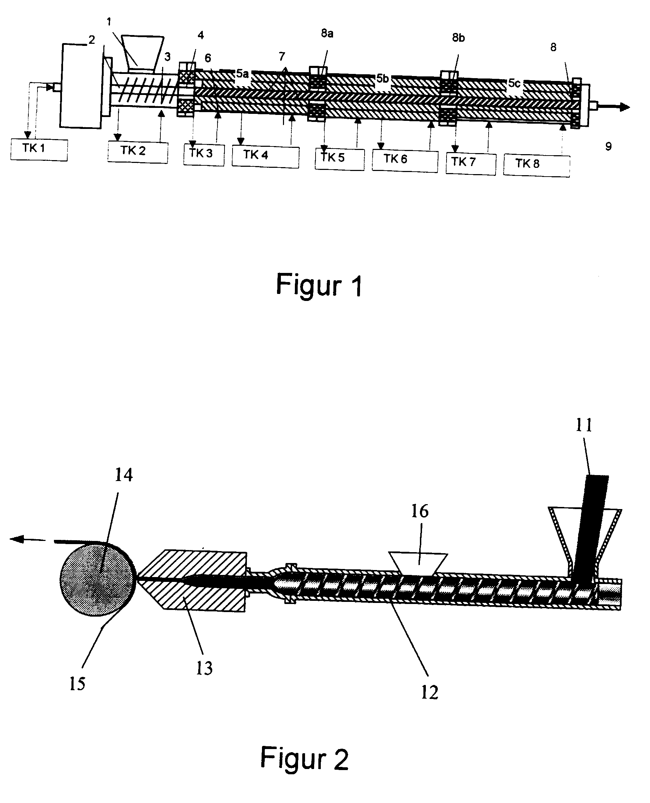

In den Beispielen wurde ein Planetwalzenextruder der Firma ENTEX Rust&Mitschke verwendet. Der Durchmesser eines Walzenzylinders betrug 70 mm, seine Verfahrenslänge ist zwischen 400 mm und 1200 mm variiert worden.
Eine der Planetwalzenextruder-Konfigurationen, wie sie in den nachfolgenden Beispielen verwendet wurde, zeigt Figur 1.

Der Planetwalzenextruder hat einen Füllteil (2) und einen Compoundierteil (5), der aus drei hintereinander geschalteten Walzenzylindern (5a-5c) bestand. Innerhalb eines Walzenzylinders tauschen die durch die Umdrehung der Zentralspindel (6) angetriebenen Planetenspindeln (7) die Materialien zwischen Zentralspindel (6) und Planetenspindeln (7) beziehungsweise zwischen Planetenspindeln (7) und der Wandung des Walzenzylinders (5a-5c) ab. Die Drehzahl der Zentralspindel (6) konnte stufenlos bis 110 Umdrehungen pro Minute eingestellt werden.

Am Ende jedes Walzenzylinders (5a-5c) befindet sich ein Anlaufring (8), der die Planetenspindeln (7) ortsfest hält.

Über die Füllöffnung (1) wurden alle Feststoffkomponenten der lösungsmittelfreien Selbstklebemasse wie Elastomere, Harze, Füllstoffe, Antioxidantien usw. auf die Förderschnecke (3) des Füllteils (2) des Planetwalzenextruders dosiert. Die Förderschnecke (3) übergibt die Materialien danach auf die Zentralspindel (6) des ersten Walzenzylinders (5a). Zur Verbesserung des Materialeinzugs zwischen Zentralspindel (6) und Planetenspindeln (7) wurden im ersten Walzenzylinder (5a) sechs Planetenspindeln (7) mit alternierend unterschiedlichen Längen verwendet.

Die innen hohle Förderschnecke (3) und Zentralspindel (6) sind kraftschlüssig miteinander verbunden und besitzen einen gemeinsamen Temperierkreis. Jeder Walzenzylinder (5a-5c) des Compoundierteils (5) verfügte über zwei separate Temperierkreise. Über einen weiteren Temperierkreis wurde das Füllteil (2) gekühlt. Als Temperiermedium wurde Druckwasser verwendet, die Kühlung erfolgte mit Kühlwasser von 15 °C bis 18 °C.

Die separate Dosierung von Flüssigkeiten wie Weichmacheröl beziehungsweise Vernetzer erfolgte über den Einspritzring (4) vorm ersten Walzenzylinder (5a) beziehungsweise über die mit Bohrungen versehenen Anlaufringe (8a, 8b) oder in Kombination beider Möglichkeiten.

Die Temperatur der Selbstklebemasse wurde mittels Einstechfühler im Produktaustritt (9) ermittelt.

Weiterhin soll das erfindungsgemäße Verfahren mittels weiterer Figuren näher erläutert werden, ohne damit die Erfindung unnötig einschränken zu wollen. Es zeigen
- Figur 2: den Weg des Selbstklebemasse aus dem vorgeschalteten Aggregat, vorzugsweise einem Planetwalzenextruder bis zur Beschichtung auf ein Trägermaterial und
- Figur 3: eine Übersicht über das gesamte Verfahren in einer besonders vorteilhaften Ausführungsform.

Gemäß Figur 2 kommt der Strang (11) der Selbstklebemasse aus dem vorgeschalteten Aggregat, vorzugsweise einem Planetwalzenextruder, in einen Förderextruder (12). In diesem wird die Selbstklebemasse über eine Öffnung (16) mit Hilfe von Vakuum von Luft befreit und in eine Beschichtungsdüse mit einen Kleiderbügelverteilkanal (13) gefördert, mit der die Selbstklebemasse auf das über eine Kühlwalze (14) laufende Trägermaterial (15) aufgetragen wird.

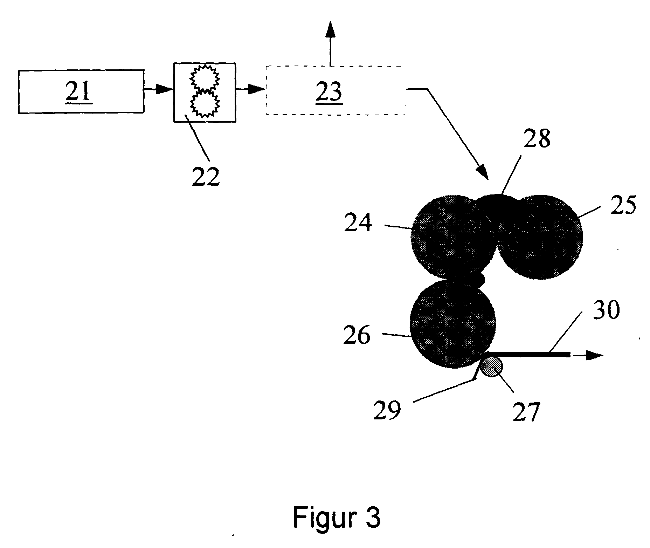

Die Figur 3 bietet schließlich eine Übersicht über das gesamte Verfahren in einer besonders vorteilhaften Ausführungsform. Im ersten Verfahrensschritt erfolgt dabei die Compoundierung der Selbstklebemasse (28) in einem Planetwalzenextruder (21). Die fertige Selbstklebemasse (28) wird in eine Schmelzepumpe (22) gefördert, die die Selbstklebemasse (28) in ein Walzenauftragswerk überführt.
Nach Compoundierung unter Schutzgasatmosphäre befindet sich zum Zwecke des Erzielens einer luftblasenfreier Selbstklebemasse (28) zwischen Schmelzepumpe (22) und Walzenauftragswerk ein Entgasungsextruder (23).
Das Walzenauftragswerk wird gebildet von einer Dosierwalze (24), einer Rakelwalze (25), die die Dicke der Selbstklebeschicht (28) auf dem Trägermaterial (29) bestimmt und einer Übertragungswalze (26). Auf einer Auflegewalze (27) werden schließlich die Selbstklebemasse (28) und das Trägermaterial (29) zusammengeführt und bilden somit ein Laminat (30).

### Beispiele

### Vergleichsbeispiele 1 bis 3

Die Effizienz eines Planetwalzenextruders hinsichtlich des erzielbaren Durchsatzes bei Verwendung von mehreren hintereinander geschalteten Walzenzylindern für das eingesetzte Verfahren der lösungsmittelfreien Herstellung von Selbstklebemassen auf Basis nicht-thermoplastischer Elastomeren zeigen Vergleichsbeispiele 1 bis 3. Verwendet wurde ein Planetwalzenextruder wie in Figur 1 prinzipiell beschrieben. Mit gleicher Rezeptur und unter sonst konstanten Bedingungen wurde der Planetwalzenextruder jeweils mit ein, zwei oder drei Walzenzylindern betrieben, wobei jeder Walzenzylinder mit 6 Planetenspindeln bestückt war und zwischen jedem Walzenzylinder ein Anlaufring mit einem freien Querschnitt von 44 mm verwendet wurde. Die Drehzahl der Zentralspindel wurde auf 100 Umdrehungen/min eingestellt. Es wurde die maximale Produktrate (Qₘₐₓ) für jede Planetwalzenextruder-Konfiguration ermittelt, bis zu der ein homogener Compound erhalten wurde.

In den Beispielen 1 bis 3 wurde die Rezeptur A verwendet. In diesem und allen folgenden Beispielen wurden die nicht-thermoplastischen Elastomeren in Granulatform mit mittleren Teilchengrößen von 8 mm verwendet. Um das Granulat dosierfähig zu halten, wurde es talkumiert. Zur Granulatherstellung wurde eine Schneidmühle der Fa. Pallmann verwendet.

### Beispielrezeptur A

| A | Komponente | Gewichtsanteil [phr] |
|---|---|---|
| | NR Air Dried Sheets | 100 |
| | Zinkoxid, aktiv | 11,4 |
| | Escorez 1202 ® | 43,6 |
| | Dercolyte S115 ® | 20 |
| | Resin 731 D ® | 50,9 |
| | Ondina G 33 ® | 8 |
| | Lowinox AH 25 ® | 2,5 |
| | Summe | 236,4 |

Aus sämtlichen Rezepturkomponenten wurde in einem 50-kg-Pulvermischer ein Premix hergestellt, der über einen volumetrisch arbeitenden Dosier in den Füllteil des Planetwalzenextruders dosiert wurde. Die Temperierkreise für die Zentralspindel und das Füllteil (TK1 und TK2) waren wassergekühlt, jedes Walzenteil wurde mit 100 °C beheizt. Die Tabelle zeigt in Abhängigkeit der Anzahl an Walzenzylindern die maximal erzielten Produktraten.

| Vergleichsbeispiel | Anzahl Walzenzylinder | Qₘₐₓ [kg/h] |
|---|---|---|
| 1 | 1 | 45 |
| 2 | 2 | 62 |
| 3 | 3 | 83 |

### Beispiel 4

Zur Herstellung von Abdeckbändern auf Papierträgerbasis diente die Rezeptur A aus den Beispielen 1-3. Die Masse wurde analog Beispiel 3 im Planetwalzenextruder hergestellt. Die Masseaustrittstemperatur betrug 112 °C.
Die so erhaltene Klebmasse wurde unmittelbar nach dem Herstellprozeß auf einen schwachgekreppten, nach branchenüblichen Verfahren imprägnierten Papierträger, welcher ein Flächengewicht von 68 g/m² aufweist, mit einer Schichtdicke von 40 µm aufgebracht.
Die Beschichtung der Klebemasse erfolgte mit Hilfe eines 4-Walzenkalanderauftragswerkes der Fa. Farrel in einer Arbeitsbreite von 1200 mm mit Massezuführung durch einen Einschneckenförderextruder. Die Beschichtung erfolgte im Gleichlauf, d.h. mit Hilfe einer bahnführenden Anlegewalze (Gummi) wurde von der dritten auftragsbestimmenden Kalanderwalze der Klebstoffauftrag auf das gekreppte Papier übertragen.
Der aus einem Förderextruder austretende Klebstoff wurde mit Hilfe eines Förderbandes changierend in den oberen Walzenspalt des Kalanders gefördert. Durch den eingestellten Spalt zwischen den beiden oberen Walzen des Kalanders wird eine Massevordosierung erreicht, die einen etwa 2 bis 3 cm dicken Klebstoff-Film erzeugt. Dieser vorgeformte Massefilm wurde durch die dritte Walze abgenommen und durch den zur dritte Walze eingestellten Spalt auf den gewünschten Masseauftrag ausgeformt. Die dritte Walze übergab mit Bahngeschwindigkeit im Gleichlauf an das über eine Anlegewalze geführte Substrat.
Zwischen den Walzen wurde eine Differenzgeschwindigkeit eingestellt im Verhältnis 6:1. Alle Walzen waren auf 113 °C temperiert. Die Beschichtungsgeschwindigkeit betrug 150 m/min.

Das so erhaltene Klebeband wies eine Klebkraft von 3,5 N/cm, Scherstandzeiten (10N) von > 1000 min, und eine Eignung als Abdeckband mit kurzzeitiger Temperaturbelastbarkeit bis zu 80 °C auf.

Die auf dem so erhaltenen Klebeband aufgebrachte Klebmasse wurde nach der Beschichtung durch Elektronenstrahlen vernetzt. Die Bestrahlung wurde an einem Scanning-Beschleuniger der Fa. POLYMER PHYSIK Tübingen bei einer Beschleunigungsspannung von 175 kV und einer Strahlendosis von 20 kGy durchgeführt.

Bei unveränderter Klebkraft erhöhten sich die nach gleicher Weise gemessenen Scherstandzeiten (10N) auf > 5000 min, und das resultierende Band wies eine Eignung als Abdeckband mit kurzzeitiger Temperaturbelastbarkeit bis zu 120 °C auf.

### Beispiel 5

Zur Herstellung eines Hochtemperatur-Abdeckbandes auf Papierträgerbasis diente die folgende Beispielrezeptur B.

### Beispielrezeptur B

| B | Komponente | Gewichtsanteil [phr] |
|---|---|---|
| | NR Air Dried Sheets | 100 |
| | Zinkoxid, aktiv | 11,4 |
| | Stearinsäure | 1,1 |
| | Escorez 1202 ® | 20 |
| | Dercolyte S115 ® | 43,6 |
| | Resin 731 D ® | 50,9 |
| | Ondina G 33 ® | 8 |
| | Lowinox AH 25 ® | 2,5 |
| | Rhenogran S 80 ® | 3,1 |
| | Rhenogran ZEPC 80 ® | 4,4 |
| | Rhenocure HX ® | 0,5 |
| | Summe | 245,5 |

Die Masseherstellung erfolgte in einem Planetwalzenextruder gemäß Figur 1 mit drei Walzenzylindern. Der erste Walzenzylinder wurde mit sechs, der zweite und dritte Walzenzylinder jeweils mit sieben Planetenspindeln bestückt. Als Zentralspindeldrehzahl wurden 110 rpm gewählt.

Die Temperierkreise 1 bis 3 und 7 bis 8 wurden mit Kühlwasser von 18 °C betrieben, die Temperierkreise 4 bis 6 wurden mit 95 °C beheizt. Die Masseaustrittstemperatur wurde zu 99 °C bestimmt.

Alle Komponenten wurden zu einem Premix vorgemischt und in den Füllteil des Planetwalzenextruders kontinuierlich mit einer Rate von 66 kg/h zudosiert.

Die so erhaltene Klebmasse wurde unmittelbar nach dem Herstellprozeß auf einen mittelgekreppten, nach branchenüblichen Verfahren imprägnierten Papierträger, welcher ein Flächengewicht von 85 g/m² aufwies, mit einer Schichtdicke von 55 µm aufgebracht.

Die Beschichtung der Klebemasse erfolgte analog Beispiel 4 in einer Arbeitsbreite von 500 mm. Alle Walzen waren auf 113 °C temperiert. Die Beschichtungsgeschwindigkeit betrug 60 m/min.

Die auf dem so erhaltenen Klebeband aufgebrachte Klebmasse wurde nach der Beschichtung durch Elektronenstrahlen gemäß Beispiel 4 vernetzt. Die Strahlendosis betrug 25 kGy.

Das so erhaltene Klebeband wies eine Klebkraft von 4,5-5 N/cm, Scherstandzeiten (10N) von größer 10 000 min, und eine Eignung als Abdeckband mit kurzzeitiger Temperaturbelastbarkeit bis zu 140 °C auf.

### Beispiel 6

Der Kleber des gemäß Beispiel 5 hergestellten Klebebandes wurde nicht mit Elektronenstrahlen, sondern unter Einwirkung von Temperatur chemisch vernetzt.

Die Vernetzung erfolgte in einem Vulkanisationskanal mit effektiver Verweilzeit von 4 min/120 °C.

Die Temperaturbelastbarkeit des so erhaltenen Bandes erhöhte sich auf 160 °C.

## Patentansprüche

1. Abdeckband, enthaltend einen bahnförmigen Träger auf Papierbasis oder Vliesbasis und eine auf einer der beiden gegenüberliegenden Seiten des Trägers aufgebrachten Beschichtung aus einer druckempfindlichen Selbstklebemasse auf Basis von nichtthermoplastischen Elastomeren, erhalten durch ein Verfahren zur kontinuierlichen lösungsmittelfreien und mastikationsfreien Herstellung in einem kontinuierlich arbeitenden Aggregat mit einem Füll- und einem Compoundierteil, bestehend aus
a) Aufgabe der Festkomponenten der Selbstklebemasse wie Elastomere und Harze in den Füllteil des Aggregats, gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze in den Compoundierteil,
d) Herstellung einer homogenen Selbstklebemasse im Compoundierteil und
e) Austragen der Selbstklebemasse,
f) Beschichtung der Selbstklebemasse auf ein bahnförmiges Material, wobei die Beschichtung des bahnförmigen Materials mit einem Mehrwalzenauftragswerk, besonders mit einem 2- bis 5-Walzenauftragswerk, ganz besonders mit einem 4-Walzenauftragswerk durchgeführt wird, so daß die Selbstklebemasse bei Durchgang durch ein oder mehrere Walzenspalte auf die gewünschte Dicke ausgeformt wird, und wobei
die Walzen des Auftragswerkes einzeln auf Temperaturen von 20 °C bis 150 °C eingestellt werden können.

2. Abdeckband nach Anspruch 1, dadurch gekennzeichnet, daß der verwendete bahnförmige Träger ein ungekrepptes Papier mit einer Reißdehnung von 1 bis 6 %, ein flachgekrepptes Papier mit einer Reißdehnung von 7 bis 20 %, ein hochgekrepptes Papier mit einer Reißdehnung von 20 bis 60 %.

3. Abdeckband nach den Ansprüchen 1 und 2, dadurch gekennzeichnet, daß die Selbstklebemasse nicht vernetzt ist und eine komplexe Viskosität von 10.000 bis 300.000 Pa*s bei 110°C und 0,1 rad/s besitzt.

4. Abdeckband nach den Ansprüchen 1 bis 3, dadurch gekennzeichnet, daß die Selbstklebemasse ein thermisch reaktives Vernetzungssystem enthält, das mindestens ein Vernetzungshilfsmittel aus der Familie der Phenolharze oder Alkylphenolharze oder ihrer halogenierten Derivate sowie optional ein saures Kolophoniumharz oder ein saures Kolophoniumharzderivat und mindestens ein zweiwertiges Metalloxid enthält.

5. Abdeckband nach Anspruch 4, dadurch gekennzeichnet, daß die Selbstklebemasse thermisch reaktive Vemetzungshilfsmittel aus der Familie der Phenolharze oder Alkylphenolharze oder ihrer halogenierten Derivate enthält, die in aliphatischen und aromatischen Kohlenwasserstoffen schwer oder nicht löslich sind.

6. Abdeckband nach den Ansprüchen 1 bis 3, dadurch gekennzeichnet, daß die Selbstklebemasse als Vernetzungshilfsmittel thermisch reaktive, blockierungsmittelfreie Isocyanate enthält, wobei die Funktionalität der thermisch reaktiven, blockierungsmittelfreien Isocyanate im Mittel größer als 1 ist.

7. Abdeckband nach einem der vorhergehenden Ansprüche, dadurch gekennzeichnet, daß der bahnförmige Träger bei im wesentlichen unveränderter Masseverankerung weder einen physikalischen Primer noch einen chemischen Primer enthält.

8. Abdeckband nach einem der vorhergehenden Ansprüche, dadurch gekennzeichnet, daß das Aggregat ein Planetwalzenextruder ist, dessen Compoundierteil vorzugsweise zumindest aus zwei, besonders bevorzugt aber aus drei gekoppelten Walzenzylindern besteht.

9. Abdeckband nach einem der vorhergehenden Ansprüche, dadurch gekennzeichnet, daß die Beschichtung durch ein 4-Walzenauftragswerk erfolgt, dessen Walzen folgende Eigenschaften aufweisen:
Dosierwalze, Rakelwalze und Übertragungswalze biegesteif,
Dosierwalze und Übertragungswalze Stahl, verchromt, porenfrei, geschliffen, hochglanzpoliert, max. Rauhtiefe 0,4 µm, Rakelwalze PU, Shore-Härte D = 95.

10. Abdeckband nach einem der vorhergehenden Ansprüche, dadurch gekennzeichnet, daß die nicht-thermoplastischen Elastomere ausgewählt sind aus der Gruppe der Naturkautschuke, der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) der Polyolefine, und der Polyurethane und/oder deren Blends.

11. Abdeckband nach einem der vorhergehenden Ansprüche, dadurch gekennzeichnet, daß den nicht-thermoplastischen Elastomeren thermoplastische Elastomere mit einem Gewichtsanteil von 10 bis 50 Gew.-% zugegeben werden.

12. Abdeckband nach einem der vorhergehenden Ansprüche, dadurch gekennzeichnet, daß die Dicke der Selbstklebemasse auf dem bahnförmigen Material beträgt zwischen 10 µm und 2000 µm, vorzugsweise zwischen 15 µm und 150 µm.
